# EUROPEAN PATENT APPLICATION

(11) **EP 3 582 155 A1**
(43) Date of publication of application: **18.12.2019**
(21) Application number: 18751418.7
(22) Date of filing: 16.01.2018
(51) Int. Cl.: G06Q 10/02, G06Q 30/06

(54) **ENTERTAINMENT QUALITY CONTROL DEVICE AND PROGRAM**

(30) Priority: 07.02.2017 JP 2017020390
(71) Applicant: Playground Co., Ltd., Tokyo 150-0011 (JP)
(72) Inventor: ITO Keiji, Tokyo 150-0011 (JP); KONO Takahiro, Tokyo 150-0011 (JP)
(74) Representative: Müller-Boré & Partner Patentanwälte PartG mbB
(86) International application number: PCT/JP2018/001013
(87) International publication number: WO 2018/147009

(57) **Abstract**

An object of the present invention is to provide an entertainment quality control device capable of controlling various types of entertainment quality. The entertainment quality control apparatus comprises: user evaluation means for evaluating a user; and sales permission determination means for determining whether or not to sell a ticket in accordance with a received purchase request in response to a purchase request of a ticket relating to an entertainment from the user, based on evaluation of the ticket to the user by the user evaluation means.

## Description

### Technical Field

The present invention relates to an entertainment quality control device and a program for controlling various entertainment qualities such as music and sports. The quality of the entertainment refers to the overall quality grasped by, for example, the attributes of the visitors of the entertainment, the availability of the ticket of the entertainment, and the like.

### Background Art

Conventionally, in various types of entertainment such as music and sports, paper tickets and electronic tickets to be displayed and used on terminals such as smartphones as admission tickets are sold, and only those who have these tickets can enter the venue. When selling a ticket, it is also possible to record the ticket to be sold and the purchaser in association with each other, for example (for example, see Patent Document 1).

### Prior Art References

### Patent Document

Patent Document 1: Japanese Patent Application Laid-Open 2016-071544

### Summary of the Invention

### Problems to be solved by the Invention

Entertainment generally refers to performing performances and sports, taking admission fees and allowing visitors to watch them. In this specification, however, the entertainment is not limited to the above, and includes events such as performances and sports, theme parks, amusement parks, and other various entertainment and play facilities, and the person who holds tickets is permitted to enjoy the admission and experience regardless of whether or not the fees such as admission fees and experience fees have been collected. In such an entertainment, the behavior of one visitor (customer) influences the evaluation of another visitor (customer) for the entertainment. For example, in an event, if there are many visitors who are rising (so-called nori) or if they are located in an appropriate area, it is easy for other visitors to evaluate the event as being of high quality, and on the contrary, if there is a visitor who acts as a nuisance, it is easy for other visitors who are around the nuisance to evaluate the event as being of low quality. For this reason, there is a need for the promoter to control the quality of the performer itself by setting the quality of the visitor to a desired level.

In recent years, there has been a problem of reselling admission tickets for various types of entertainment, contrary to the intention of the promoter. For example, in the case of popular entertainment, there is a problem that admission tickets are not distributed to the customer group intended by the promoter due to an increase in resale prices, a purchase by some persons, and the like. On the other hand, there are some promoters who want to allow reselling to some extent and increase the number of visitors, and it is difficult to uniformly prohibit reselling. The availability of such tickets also influences the quality of the entertainment (evaluation of the entertainment by the users).

The present invention has been made to solve the above problems, and an object thereof is to provide an entertainment quality control apparatus capable of controlling various types of entertainment quality, and a program for realizing the entertainment quality control apparatus.

### Means for solving the Problems

In order to solve the above-mentioned problems, the entertainment quality control device according to the present invention comprises a user evaluation means for evaluating a user, and a sales permission determination means for determining whether or not to sell a ticket in response to a received purchase request relating to an entertainment from the user, based on an evaluation by the user evaluation means to the user, according to the received purchase request.

According to the present invention, owing to the above-described configuration, it is possible to control the quality of the visitors of the entertainment and the availability of the tickets, and thus the quality of the entertainment itself, by determining whether or not the ticket can be purchased in accordance with the evaluation of the user who desires to purchase the ticket of the entertainment.

In the present invention, the user evaluation means may evaluate the user based on at least one of the appropriateness of the purchase history, the appropriateness of the account, the appropriateness of the admission history, the appropriateness of the transfer destination, and the appropriateness of the fan capability. The user evaluation means may evaluate the user based on the relationship between the user and a third party (SNS, telephone line contract, etc.) as well as the relationship between the user and the entertainment or ticket seller. In this manner, the quality of the user can be appropriately evaluated.

According to the present invention, the user evaluation means may calculate a score representing an evaluation for the user, and the sales permission determination means may determine whether or not to sell the ticket according to the received purchase request based on the score calculated by the user evaluation means in response to the purchase request from the user. This makes it possible to numerically evaluate the evaluation of the user, thereby facilitating objective evaluation.

In the present invention, the sales permission determination means may determine whether or not to sell the ticket based on the result of comparison between the score calculated by the user evaluation means and the predetermined threshold value. Alternatively, the sales permission determination means may perform a lottery in response to the received purchase request, determine whether or not the lottery has been won at a winning rate in accordance with the score calculated by the user evaluation means, and determine to sell the ticket when the lottery has been won. In this way, the quality of the user who purchases the ticket can be controlled as desired.

The user evaluation means may calculate a score for each of the plurality of parameters based on the plurality of parameters, and may calculate a comprehensive score based on the score for each of the plurality of parameters.

The entertainment quality control device may further include a ticket management means for managing the electronic ticket, and the ticket management means may issue the electronic ticket when the sales permission determination means determines that the sale is permitted.

In the present invention, the electronic ticket may be allowed to be transferred from the user who owns the electronic ticket to another user, the user evaluation means my evaluate the other user, and the ticket management means may reject the transfer or invalidate the electronic ticket to be transferred when the evaluation of the other user by the user evaluation means satisfies a predetermined condition. By doing so, it is possible to prevent tickets from spreading to unintended users and prevent unauthorized resale.

In the present invention, the ticket management means stores the past owner of the electronic ticket, and may invalidate the electronic ticket having a history of being owned by the user who satisfies the predetermined condition. By doing so, it is possible to invalidate a ticket that has undergone unauthorized resale or the like after the fact. In addition, by providing such a function, unauthorized resale can be suppressed.

The entertainment quality control device according to another embodiment of the present invention is an entertainment quality control device used in an electronic ticket system that allows the transfer of an electronic ticket from a user who owns an electronic ticket to another user. The entertainment quality control device may include: a user evaluation means that evaluates another user; and a ticket management means that manages an electronic ticket, that rejects the transfer of the electronic ticket or invalidates the electronic ticket to be transferred when the evaluation of another user by the user evaluation means satisfies a predetermined condition in response to a request for the transfer of the electronic ticket from the user who owns the electronic ticket to the other user.

The entertainment quality control apparatus according to still another embodiment of the present invention may store a past owner of an electronic ticket and may invalidate an electronic ticket having a history of being owned by a user who satisfies a predetermined condition.

The program according to the present invention is characterized in that the computer functions as an entertainment quality controller as described in any of the foregoing.

### Brief Description of the Drawings

Fig. 1 is a schematic diagram showing a configuration of an electronic ticket system 1.
Fig. 2 is a block diagram showing the configuration of the server 2.
Fig. 3 is a block diagram showing the configuration of the user terminal 3.
Fig. 4(a) is a side view of the stamp 4, and Fig. 4(b) is a bottom view of the stamp 4.
Fig. 5 is a flowchart showing a processing procedure in the server 2 at the time of purchasing and issuing an electronic ticket.
Fig. 6 is a flowchart showing a processing procedure in the server 2 when transferring an electronic ticket.
Fig. 7 shows an example of a display screen of an electronic ticket application.
Fig. 8 is a flowchart showing a processing procedure in the server 2 when canceling a ticket.
FIG. 9 is a flowchart showing a processing procedure of the electronic ticket system 1 when the electronic ticket is used.

### Description of Embodiments

The entertainment quality control device according to the present invention is applied to, for example, an electronic ticket system. Embodiments of the present invention will be described below with reference to the drawings.

### [Basic configuration of electronic ticket system to which the entertainment quality control device is applied]

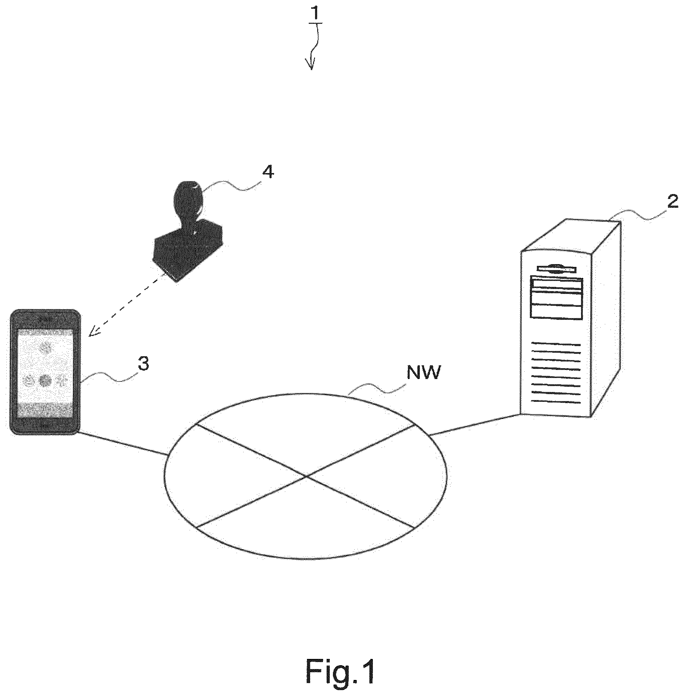

FIG. 1 shows a configuration example of an electronic ticket system 1 to which an entertainment quality control apparatus according to the present invention is applied. As shown in FIG. 1, the electronic ticket system 1 includes a server 2, a user terminal 3, and a stamp 4. The server 2 and the user terminal 3 are connected via a network NW such as the Internet.

### [Server configuration]

The server 2 is a device managed by a system operator, for example, a ticket sales company, in the electronic ticket system 1. The server 2 is an example of a configuration for realizing the function of the entertainment quality control device according to the present invention. The servers 2 are, for example, computer systems, and are composed of input/output devices such as keyboards, mice, and touch panels, a main body including a calculation unit such as a CPU (Central Processing Unit) and storage devices such as a RAM (Random Access Memory) and a ROM (read only memory), and display devices such as CRTs (Cathode Ray Tube) and LCDs (Liquid Crystal Display), and the like.

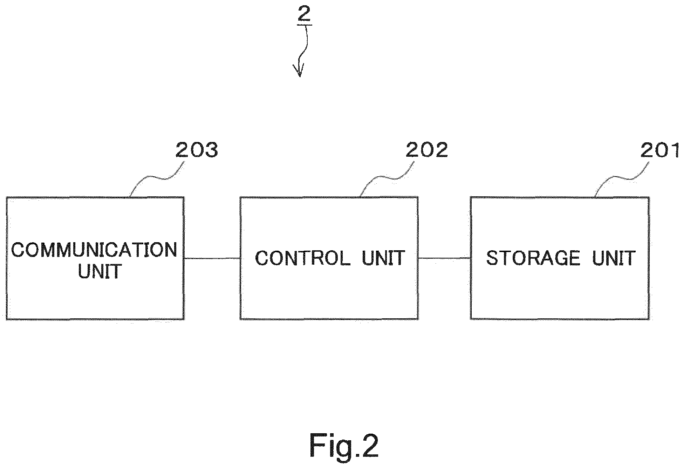

As shown in FIG. 2, the server 2 includes at least a storage unit 201, a control unit 202, and a communication unit 203. The storage unit 201 of the server 2 stores a program executed by the control unit 202, data used by the program, and the like. For example, the storage unit 201 stores various programs for realizing the function of the server 2 in the electronic ticket system 1, a database related to the electronic ticket managed by the electronic ticket system 1, and the like. The server 2 does not have to be configured such that each of the above-described configurations is physically integrated. For example, some or all of the above-mentioned components may be distributed to remote locations, and they may cooperate to function as the server 2.

The control unit 202 executes processing according to the program stored in the storage unit 201 based on a request or the like transmitted from the user terminal 3. For example, the control unit 202 executes processing such as retrieval, new registration, deletion, and update of data with respect to various databases stored in the storage unit 201, and performs communication with the user terminal 3 via the communication unit 203 and the network NW.

The server 2 executes the program stored in the storage unit 201 by the control unit 202, thereby realizing the functions of various means in the present invention, that is, a request receiving means for receiving a purchase request of a ticket from a user requesting to purchase a ticket of an entertainment together with user identification information for identifying the user, a user evaluation means for evaluating the user of the entertainment quality control device, a sales permission determination means for determining whether or not to sell the ticket in accordance with the received purchase request of the ticket based on the evaluation by the user evaluation means, a ticket management means for managing an electronic ticket, and a malicious user extracting means for extracting a malicious user.

The database stored in the storage unit 201 includes, for example, a member database, an entertainment database, a ticket database, and a blacklist database, which will be described below.

The member database is a database in which users who purchase tickets are registered. The member data base stores information related to users such as user IDs (user identification information), names, addresses, contact addresses, user attribute information (e.g., age, sex), ticket purchase history (e.g., number of past tickets purchased), usage history (e.g., number of past tickets used), cancellation history (e.g., number of past tickets used), personal identification numbers (e.g., My Number information, passport information, license information), accounts of external network services (e.g., LINE accounts, Facebook accounts), terminal information (e.g., terminal telephone numbers, GPS information), etc. in association with each other.

The entertainment database is a database in which information on the entertainment is registered. The entertainment database stores various pieces of entertainment information such as an entertainment ID, an entertainment name, a date and time, a venue, and a score reference value in association with each other. Here, the score reference value is a value used for adjusting a threshold value or a winning rate of a lottery when judging whether to purchase or transfer. The score reference value can be set for each entertainment.

The ticket database is a database in which information of a plurality of types of tickets to be sold is recorded. The ticket database stores information related to the ticket, such as a unique ticket ID, an entertainment ID, a ticket type (type of seat), a seat number (in the case of a designated seat), an erase key, a user ID of the owner, and a status (used/unused, etc.) in association with each other. One or a plurality of entertainment IDs are associated with one ticket ID to specify an entertainment target of the ticket. As a ticket to which a plurality of entertainment IDs are linked, for example, a free path or the like that can be used in a plurality of entertainment is assumed. The owner of the ticket is specified by associating the user ID of the purchaser with one ticket ID. In the ticket database, the user ID of the past owner of the ticket ID (i.e., the history of the subsequent purchaser) is recorded in association with the ticket ID.

The blacklist database is a database that stores user IDs of malicious users. In the blacklist database, a user ID, a blacklist registration date, a reason for the blacklist registration, and the like are stored in association with each other.

### [Configuration of Terminal Equipment]

The user terminal 3 is a terminal owned by the user. The user terminal 3 is, for example, a tablet type terminal or a smart phone, and is composed of a touch panel, a calculation unit such as a CPU, a storage device such as a RAM or a ROM, a display device such as an LCD, a speaker for outputting sound, a microphone for collecting sound, and the like.

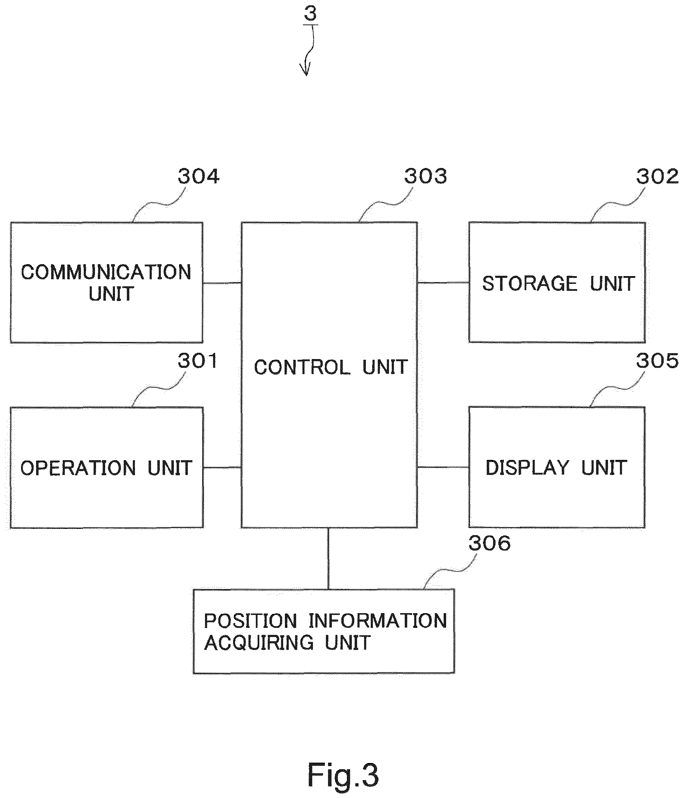

As shown in FIG. 3, the user terminal 3 includes at least an operation unit 301, a storage unit 302, a control unit 303, a communication unit 304, a display unit 305, and a position information acquiring unit 306.

The operation unit 301 receives an operation by the user U. The operation unit 301 includes a touch panel 301a which are arranged to overlap with the display unit 305 and other buttons 301b. The storage unit 302 stores a program executed by the control unit 303, data used by the program, and the like. The storage unit 302 stores, for example, an operation system (OS), an application program for the electronic ticket system 1 (hereinafter, simply referred to as an electronic ticket application), data of a purchased electronic ticket used in the electronic ticket application, information of a user, and the like. In addition to the ticket ID, the data of the purchased electronic ticket may store, for example, an entertainment ID, an entertainment name, a date and time of the entertainment, a venue, a ticket type, a seat number, deletion key, a user ID of the purchaser, a status, a ticket image, and the like.

The electronic ticket application may be dedicated application software for using the electronic ticket system 1, or may be a browser or a messenger application. When a browser or a messenger application is used as an electronic ticket application, the user terminal 3 may access the server 2 by using the electronic ticket application, and may acquire and display data relating to purchased electronic tickets and the like from the database of the server 2 at any time. In the case of adopting such a configuration, the user terminal 3 may store only the minimum necessary information (e.g., account information for using the electronic ticket system 1, etc.) in the storage unit 302, and may appropriately acquire information of purchased electronic tickets, etc. from the server 2, for example.

The control unit 303 executes various programs such as an electronic ticket application stored in the storage unit 302. In the electronic ticket application, as will be described in detail later, various data stored in the storage unit 302 and processing based on the operation of the operation unit 301 are performed.

The communication unit 304 communicates with the server 2 via the network NW. In addition, the communication unit 304 may be configured to be capable of short-range wireless communication (NFC), infrared communication, visible light communication, or the like.

The display unit 305 is a display element such as a liquid crystal display, and displays various information (ticket faces of electronic tickets) under the control of the control unit 303. The display unit 305 realizes various input interfaces in cooperation with the touch panel 301a.

The position information acquiring unit 306 acquires the current position of the user terminal 3. For example, a GPS (Global Positioning System) receiver, a Bluetooth (registered trademark), a WiFi, geomagnetism, or the like may be used as the position information acquiring unit 306.

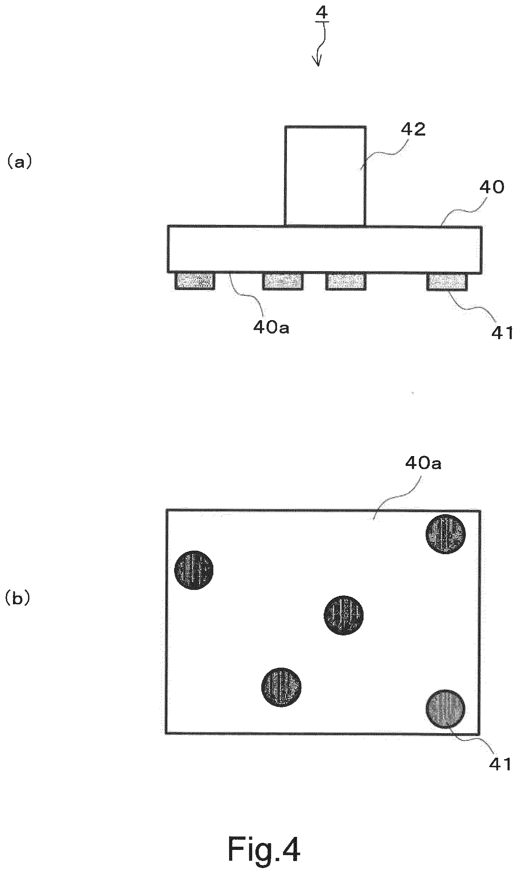

FIG. 4(a) is a side view of the stamp 4, and FIG. 4(b) is a bottom view of the stamp 4. The stamp 4 functions as a deletion means used in the electronic ticket system 1 for performing "deletion", which make the electronic ticket into used, in the user terminal 3. The stamp 4 has a plurality of contact members 41 arranged on a bottom surface 40a of the main body 40 for contacting the touch panel and the like, and a handle 42 for gripping the main body 40 is provided on an upper portion of the main body 40. When contact of a conductive material is required to detect a position on the touch panel, it is desirable to use a conductive member for the contact member 41 and a non-conductive member for the main body 40 to prevent a detection error. When the contact members 41 of the stamp 4 are pressed, the electronic ticket application of the user terminal 3 detects the arrangement pattern of the contact members, and specifies deletion key corresponding to the arrangement pattern. As shown in FIG. 4(b), the present embodiment includes five contact members 41, but a larger number of mutually different arrangement patterns can be realized by the number and arrangement of the contact members 41, and a unique deletion key is assigned to each arrangement pattern.

A configuration other than the stamp 4 may be adopted as the deletion means for deleting the electronic ticket stored in the user terminal 3. For example, a configuration may be adopted in which deletion key linked to an electronic ticket and/or the deletion key possessed by an deletion means are exchanged and matched by short-range wireless communication, infrared communication, visible light communication, QR code (registered trademark), bar code reading, or the like. Alternatively, the owner of the ticket may be confirmed by biometric authentication or the like without using the user terminal 3, and the electronic ticket may be deleted when the owner is confirmed.

Next, a flow in which a user purchases and uses an electronic ticket including a transfer, a cancellation, and the like that may be performed after the purchase and before the use by using the electronic ticket system 1 configured as described above will be described.

### [Purchase and Issuance of Electronic Tickets]

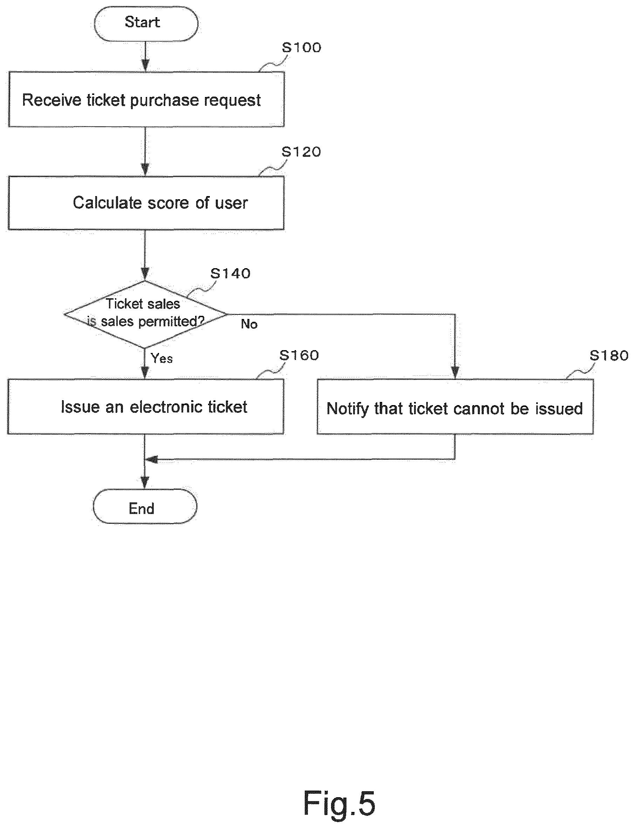

FIG. 5 is a flowchart showing a processing procedure in the server 2 at the time of purchasing and issuing an electronic ticket. The user applies for the purchase of a ticket through a ticket sales store, a ticket sales terminal, a ticket site provided on the Internet, or the like. At the time of this application, the user designates various conditions such as an event, a seat type, the number of seats, a settlement method, and the like together with the user ID of the user himself/herself. In response to this application, a ticket purchase request including the user ID and information of the ticket desired to be purchased is transmitted to the server 2. Server 2 functions as a request receiving means and receives a purchase request for tickets (step S100). The purchase request of the ticket may be manually registered by the operator in the server 2, instead of being received by the server 2 via the communication means.

The server 2 functions as a user evaluation unit, and evaluates the user based on at least one of the appropriateness of the purchase history, the appropriateness of the account, the appropriateness of the admission history, the appropriateness of the transfer destination, and the appropriateness of the fan capability with respect to the user ID included in the received purchase request (step S120). Specifically, the server 2 calculates the score of the user based on at least one of the appropriateness of the purchase history, the appropriateness of the account, the appropriateness of the admission history, the appropriateness of the transfer destination, and the appropriateness of the fan capability. The score calculated by the server 2 may be a single numerical value that integrates the appropriateness of the purchase history, the appropriateness of the account, the appropriateness of the admission history, the appropriateness of the transferee, the appropriateness of the fan capability, and the like, or may be a score for each item (for example, the appropriateness of the purchase history is 50 points, the appropriateness of the admission history is 70 points, and the like) regarding the appropriateness of the purchase history, the appropriateness of the account, the appropriateness of the admission history, the appropriateness of the transferee, the appropriateness of the fan capability, and the like. Further, when calculating the score for each item, the score may be weighted for each item as necessary to calculate the overall score, and the weight for each item may be arbitrarily set. For example, it is particularly preferable that the weight for each item can be set in association with the entertainment ID. In this manner, it is possible to easily calculate a high score for a desired user group such as a promoter, and it is possible to control the quality of the visitor to the entertainment at the ticket sales stage.

The server 2 functions as a sales permission determination unit, and determines whether or not to sell tickets in response to the received purchase request based on the calculated scores (step S140). For example, the server 2 may determine whether or not to sell based on whether or not the score exceeds a predetermined threshold. Alternatively, the winning probability may be changed according to the score by determining whether or not to sell by lottery. The steps S120 and/or S140 may not be performed immediately after receiving the purchasing request. For example, in a configuration for determining whether or not to sell by lottery, a purchase request may be received until a predetermined timing, and a lottery may be performed after the deadline for the reception, to determine whether or not to sell. Further, the S120 of steps and/or the S140 process may be executed when the user operates to receive tickets. In addition to the score, the completion of the settlement may be a condition for allowing the sale.

If the selling is permitted in step S140 (step S140;Yes), server 2 functions as the ticket management means and issues electronic tickets (step S160). As a specific process performed at this time, the server 2 associates the user ID of the purchaser with the ticket ID to be issued in the ticket database. The server 2 transmits the information of the purchased electronic ticket to the user terminal 3 of the purchaser. The user terminal 3 of the purchaser receives the information of the electronic ticket from the server 2 via the network NW and the communication unit 304, and records the information in the storage unit 302. Based on the information of the received electronic ticket, the electronic ticket application executed by the user terminal 3 can display the face of the electronic ticket on the display unit 305. Thus, the processing at the time of purchasing and issuing the electronic ticket is completed. On the other hand, if it is determined in step S140 that the ticket cannot be sold (step S140: NO), a notification that the ticket cannot be issued is transmitted from the server 2 to the user terminal 3 (and, if needed, to the ticket shop, ticket sales terminal, or the like to which the ticket purchase has been requested), and the process is terminated (step S180).

### [Transfer of Electronic Tickets]

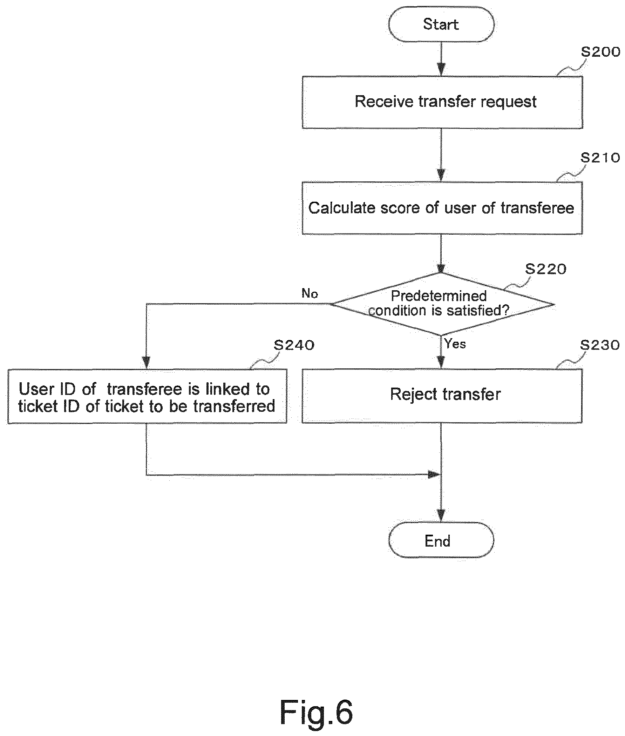

The electronic ticket system 1 is configured to be able to transfer a purchased ticket to another person. FIG. 6 is a flowchart showing a processing procedure in the server 2 when a ticket is transferred.

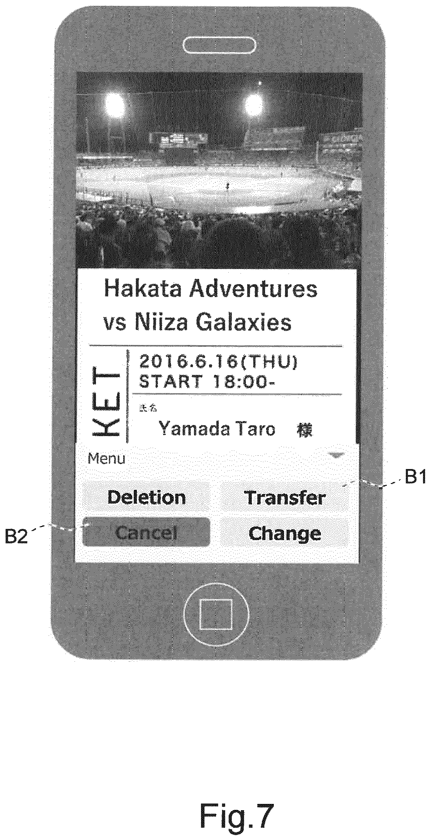

In order to make it easy for the user to transfer the ticket to another person, when the user terminal 3 displays the ticket face of the purchased ticket by using the electronic ticket application, a transfer button B1 (see FIG. 7) for applying for transfer to another user is displayed. When the user presses the transfer button B1, an interface for designating a transfer destination user account is displayed, and a transfer request for transfer of a ticket is transmitted from the user terminal 3 to the server 2 via the interface.

The server 2 functions as the request receiving means and upon receiving the transfer request (step S200), functions as a user evaluation means, and calculates the user's score based on at least one of the following: the appropriateness of the purchase history, appropriateness of the account, appropriateness of the admission history, appropriateness of the transferee, and appropriateness of the fan capability with regard to the user ID of the transferee included in the received transfer request (step S210). Then, it is determined whether or not the score satisfies a predetermined condition (step S220), and if the condition is satisfied (step S220;Yes), the server 2 rejects the transfer of tickets in response to the transfer request (step S230). For example, if the calculated score falls below a predetermined value, the server may satisfy the predetermined condition. If the condition is not satisfied, the ticket is maintained in a usable state as it is. On the other hand, if the condition is not satisfied (Step S220;No), Server 2 acts as a ticket management means, and in the ticket database, as the user ID of the owner linked to the ticket ID of the ticket to be transferred, the user ID of the transferee is linked(Step S240). The user ID of the transfer source is additionally recorded as the user ID of the past owner of the ticket ID in association with the ticket ID of the transfer target. That is, the history of the subsequent purchaser is updated. The user terminal 3 of the transfer source disables the use of the ticket, and the user terminal 3 of the transferee enables the use of the ticket.

When the scores calculated in step 210 satisfy the predetermined condition (step S220; YES), the server 2 may revoke the tickets instead of denying the transfer.

### [Cancel electronic ticket]

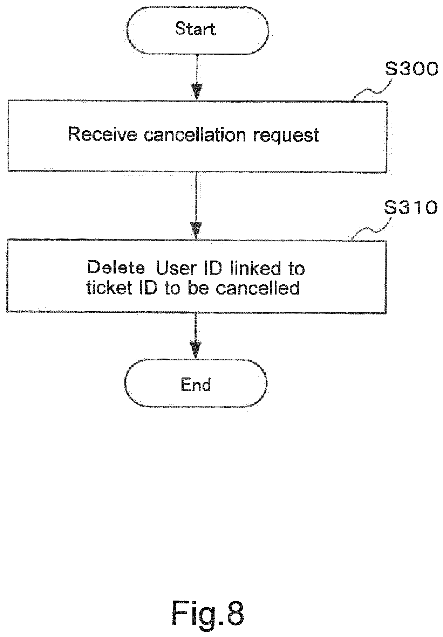

The electronic ticket system 1 is configured to be able to cancel purchased tickets. FIG. 8 is a flowchart showing a processing procedure in the server 2 at the time of canceling the ticket.

In order to make it easy for the user to cancel the ticket, when the ticket face is displayed on the user terminal 3 using the electronic ticket application, a cancel button B 2 for applying for cancellation (see FIG. 7) is displayed. When the user presses the cancel button B 2, a cancel request is transmitted from the user terminal 3 to the server 2. The server 2 functions as the request receiving means and upon receiving a cancellation request (step S300), functions as a ticket management means, and in the ticket database deletes the user ID of the owner associated with the ticket ID to be cancelled (step S310). The ticket is disabled in the user terminal 3.

### [Extraction of malicious users and invalidation of tickets]

The server 2 may have a function of invalidating an electronic ticket possessed by a user satisfying a predetermined condition. The predetermined condition may be a condition indicating a malicious user. Specifically, it is preferable to set the registration in the black list database, the score lower than a predetermined value, and the like as predetermined conditions. For example, the server 2 functions as malicious user extraction means, extracts malicious users based on scores calculated at the time of ticket purchase or ticket transfer, and records the user ID in the black list database. For example, the server 2 may periodically calculate the scores of all or some of the users other than when the ticket is purchased or when the ticket is transferred, and may extract malicious users based on the scores calculated at this time. The server 2 may record the user ID of the user whose score is lower than a predetermined threshold in the blacklist database. In the blacklist database, the user ID of the user specified as a nuisance customer, the user ID specified as an unauthorized retailer, and the like are individually recorded and updated in addition to the user extracted by the malicious user extraction means.

The server 2 functions as a ticket management means, and imposes a penalty on a ticket having a history of acquisition owned by the user of the user ID recorded in the blacklist database. The penalty imposed at this time may be, for example, revocation of a ticket. By imposing the revocation as a penalty, extremely strong deterrence against unauthorized transfer and resale can be expected. As a penalty, a response different from the normal response may be performed when the ticket is used (that is, when the ticket is entered). For example, when the electronic ticket displayed on the user terminal 3 is erased, the user terminal 3 may be configured to display a warning, flash, or sound a warning, which is different from normal. When such warning display, flash light, warning sound, or the like is generated, individual detailed confirmation by the staff can be performed to confirm the presence or absence of fraud, and to provide the user with a restraint against obtaining a ticket on a fraudulent route.

The penalty may be given to a ticket other than a ticket having a history acquired through the user ID recorded in the blacklist database. Penalties may be imposed based on the number of transfers, the history of transfers to distant people in social graphs (indicators of human correlations on the Web, their connections, and associations) such as those who are not friends in the SNS. In addition, a score may be assigned to each ticket in accordance with the history of transfer, and a penalty may be imposed in accordance with the score. The score for each ticket may be calculated based on, for example, acquisition via a user ID registered in the black list, the number of times of transfer, transfer to a distant person on the social graph, and the like.

### [Using Electronic Tickets]

The purchaser of the electronic ticket receives the information of the electronic ticket transmitted from the server 2 at his/her user terminal 3. When the electronic ticket is used, the ticket face of the electronic ticket is displayed on the display unit 305 of the user terminal 3 to be presented at the entrance of the entertainment, and the user enters the venue of the entertainment through the extinguishing process of making the electronic ticket used. Although various deletion means for realizing the deletion process can be considered, in the present embodiment, the deletion process using the stamp 4 is performed as the deletion means described below. It is needless to say that the deletion process using the deletion means other than the stamp may be employed. For example, the owner of the ticket may be confirmed by biometric authentication or the like without using the user terminal 3, and the electronic ticket may be deleted when the owner is confirmed. In the case of employing any of the deletion processes, the server 2 may accumulate the history of the deletion.

When the user activate the electronic ticket application by operating the operation unit 301 of the user terminal 3, the control unit 303 selectively displays the received electronic ticket on the display unit 305. When the user operates the operation unit 301 to select a desired electronic ticket, the control unit 303 displays the ticket face of the selected electronic ticket on the display unit 305 based on the information of the selected electronic ticket.

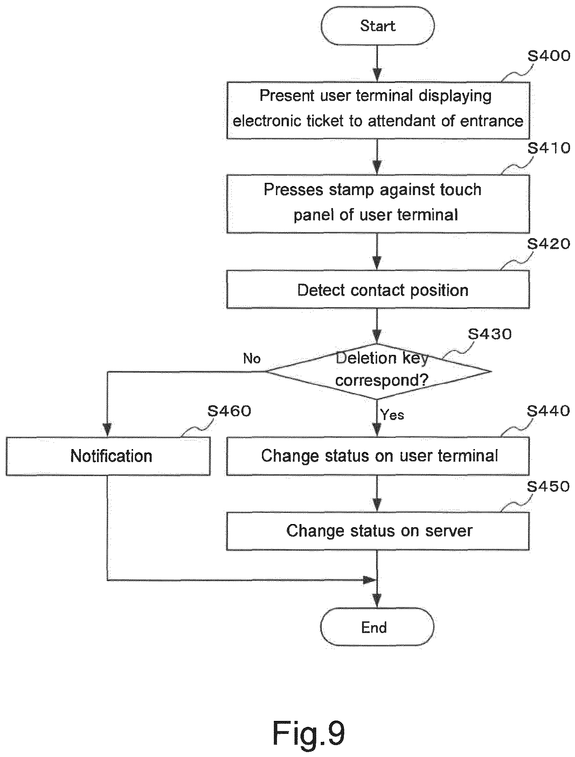

FIG. 9 is a flowchart showing a processing procedure of the electronic ticket system 1 when the electronic ticket is used. The user displays the ticket face of the electronic ticket on the display unit 305 of the user terminal 3 by the above-described operations at the entrance of the entertainment on the day of the entertainment, and presents the ticket face to the attendant of the entrance (step S400). While visually confirming that the ticket surface of the electronic ticket of the entertainment is that of the entertainment, the attendant presses the stamp 4 against the touch panel 301a of the user terminal 3, thereby "deletion" to make the electronic ticket be into used status is performed (step S410). At this time, the stamp 4 may be pressed in a state in which the ticket face is displayed on the display unit 305, or the stamp 4 may be pressed after the screen for deletion is displayed. The touch panel 301a of the user terminal 3 detects the contact position of the stamp 4 by the contact member 41 (step S420). Then, the control unit 303 of the user terminal 3 identifies the deletion key corresponding to the touch position detected by the touch panel 301a and checks whether the identified deletion key corresponds to the deletion key of the electronic ticket displaying the ticket face in step S430. If they correspond (step S430; Yes), characters and images indicating the used status (hereinafter referred to as "deletion information") are displayed superimposed on the ticket surface, and the status is set to "used" (step S440) . When the electronic ticket corresponds to the deletion key, the user terminal 3 notifies the server 2 of the fact that the electronic ticket has been used at an appropriate time (immediately after the checking or after a short time has elapsed), and the server 2 sets the status of the electronic ticket to "used" (step S450), and ends the process. The server 2 recognizes that the user has used the ticket, and updates the usage history of the user. This usage history is used when calculating an entrance rate or the like, which will be described later. On the other hand, when the key does not correspond to the deletion key (step S430; No), information (for example, characters or images) indicating the fact is displayed on the display unit 305, a buzzer sound is sounded for a predetermined period, a flash is emitted, or the like, so that the user and/or the attendant can recognize that the electronic ticket is not an appropriate electronic ticket for passing through the entrance, and the process is terminated (step S460).

In the example described above, when the deletion is performed, the user terminal 3 performs collation of the deletion key, but the contact position detected by the touch panel 301a of the user terminal 3 may be transmitted to the server 2, the server 2 may perform collation of the deletion key, and the collation result may be transmitted from the server 2 to the user terminal 3. In the case where the user terminal 3 verifies the deletion key, the deletion can be performed without being affected by the communication environment with the server 2 or the like at the time of the deletion, but the demand for the processing capacity and the storage capacity of the user terminal 3 becomes high. On the other hand, in the case where the server 2 performs the collation of the deletion key, there are advantages that the request of the processing capability or the like of the user terminal 3 is low, and by proceeding to the collation with the server 2, it is possible to confirm whether or not the same ticket is duplicated in a plurality of terminals, but there is a case where the communication environment or the like with the server 2 is affected at the time of the deletion.

Next, the function of the user evaluation means by the server 2 will be described in detail. Here, it is assumed that the user evaluation means calculates the score indicating the evaluation of the user.

The server 2 stores the information itself necessary for calculating the score of the user, or the information for obtaining the information necessary for calculating the score from the outside (e.g., the account ID and password of the SNS, the information necessary for accessing the external system, etc.) in the member database. For example, it is preferable to acquire information required for the score calculation via the APIs (Application Programming Interface) of the SNSs each time the score is calculated.

The appropriateness of the purchase history is an evaluation regarding a history of purchases of tickets by a user who is a calculation target of the score in the past. The server 2 may evaluate the adequacy of the purchase history based on, for example, whether or not the user has purchased ticket of an entertainment that cannot be joined if the user participates in the entertainment for which the ticket purchase request is sent. In this case, for example, it is preferable that the score is calculated to be low when the user has purchased ticket of the entertainment that cannot be joined if the user participates in the entertainment for which the ticket purchase request is sent. The entertainment that cannot be joined if the user participates in the entertainment for which the ticket purchase request is sent may be, for example, an entertainment in which the holding time is overlapped, or possibility of participation in both the entertainment may be determined on the basis of the venue and/or the holding time.

In addition, the appropriateness of the purchase history may be evaluated based on whether or not in the past, tickets for a plurality of entertainments have been purchased that would become impossible to participate in the other entertainment when participating in one entertainment. In this case, it is preferable that the score is calculated to be low when tickets for a plurality of entertainments (simultaneous participation impossible entertainment) have been purchased that can not participate in the other entertainment when participating in one entertainment. It is particularly preferable that the score is calculated to be lower as there is more purchase history of such simultaneous participation impossible entertainments. Whether or not the plurality of entertainments corresponds to the plurality of entertainments a plurality of entertainments have been purchased that would become impossible to participate in the other entertainment when participating in one entertainment may be determined based on, for example, whether or not the holding time is overlapped, or may be determined based on the holding place and/or the holding time.

In addition, the appropriateness of the purchase history may be evaluated based on a history of purchasing a plurality of tickets of one performance. For example, when there is a history of purchasing more tickets than a predetermined threshold value for one performance, the score may be calculated to be lower, and the score may be calculated to be lower as the history of such purchasing is larger.

In addition, the appropriateness of the purchase history may be evaluated based on the cancellation rate of tickets purchased in the past, i.e., the ratio of the number of cancelled tickets to the number of tickets purchased in the past. For example, when the cancellation rate is higher than a predetermined threshold value, the score may be calculated to be low. Alternatively, the score may be calculated to be lower as the cancellation rate is higher. In this manner, the appropriateness of the purchase history can be evaluated based on the cancellation rate, and the ticket can be easily distributed to the user with a low cancellation rate. As a result, the cancellation rate of the ticket can be maintained. The server 2, which is the entertainment quality control device, may predict the cancellation rate and provide it to the entertainer or the like. In addition, the evaluation criterion of the appropriateness of the purchase history may be made changeable based on the cancellation rate desired by the performer or the like.

The appropriateness of the purchase history may be evaluated based on the acquisition history from a malicious user account. For example, the score may be calculated to be low when the rate of acquiring from the malicious account (the ratio of the number of tickets acquired from the malicious account to the number of tickets purchased in the past) or the number of acquisitions from the malicious account is higher than a predetermined threshold. Alternatively, the score may be calculated to be lower as the percentage of acquisitions from malicious accounts is higher or the number of acquisitions from malicious accounts is larger. The malicious user account may be stored by the server 2 in a blacklist database.

In addition, the appropriateness of the purchase history may be evaluated based on a purchase rate of goods or the like related to a ticket to be purchased (and/or a ticket purchased in the past), a participation rate or an application rate in a campaign or the like related to an entertainment attempt to purchase a ticket (and/or an entertainment a ticket of which is purchased in the past). Since it is unlikely that a user who intends to illegally resale will actively take actions such as purchasing related goods or participating in campaigns, it is possible to make it difficult for the ticket being obtained by the user who intends to illegally resale a ticket by performing evaluation based on the relevant goods purchasing rate or the campaign participation rate.

The appropriateness of the account is an assessment of whether the user's account (user ID) is appropriate. The appropriateness of an account may be evaluated based on the operational status of the account and the operational history of the account. Specifically, the evaluation may be performed based on whether or not the identification has been completed, whether or not various types of information have been appropriately input in the member database, and the like. By evaluating the appropriateness of the account, it is possible to suppress the use of an account temporarily acquired for illegal ticket acquisition or resale.

The appropriateness of the account may be evaluated based on unique identification information (a personal number (so-called "My Number"), an SNS account, a telephone number, or the like) associated with the user ID. For example, when the unique identification information is a telephone number, the appropriateness of the account may be evaluated based on the type of the line of the telephone number (fixed phone, ordinary mobile phone, prepaid mobile phone, or the like), the use period of the telephone number, the telephone subscription contract period, the telephone service provider, or the like. When the unique identification information is an SNS account, the appropriateness of the account may be evaluated based on the operation status of the SNS account (e.g., the number of friends, the operation period of the SNS account, etc.).

In addition, the appropriateness of the account may be evaluated based on the position information acquired by the position information acquiring unit 306 included in the user terminal 3 of the user. For example, when the position information cannot be acquired for a long period of time, the score may be calculated to be low on the assumption that the terminal is not always used by the user. Further, the appropriateness of the account may be evaluated based on the correlation between the position information acquired by the user terminal 3 of the evaluation target user and the positional information acquired by the other user terminal 3. For example, the user ID of the user terminal 3 moving together with the other user terminal 3 for a long period of time (e.g., several days or more continuously) may be calculated to have a low score on the assumption that there is a possibility of an illegal account.

The appropriateness of a transfer destination is an evaluation regarding whether or not the transfer destination is an appropriate user (for example, whether or not transferred to a reseller or the like) with respect to a user who has a history of transfer of a ticket in the past. The appropriateness of the transfer destination may be evaluated, for example, based on the score calculated by the user evaluation unit for the user of the transferee. Specifically, for example, when there is a history of transfer to a user whose score is lower than a predetermined threshold, the score may be calculated to be low. As for the appropriateness of the transfer destination, not only the user who has directly received the ticket from the user to be evaluated, but also the user who has indirectly received the ticket by relaying one or more other users from the user to be evaluated may be included in the transfer destination, and the appropriateness thereof may be evaluated.

The appropriateness of the transfer destination may be evaluated based on the relationship between the user of the transferor and the user of the transferee in addition to the aforementioned evaluation method. For example, the evaluation may be performed based on whether or not the user of the transferor and the user of the transferee are friends in the SNS, a period during which the user is a friend in the SNS, or the like. Alternatively, it may be evaluated based on whether or not the user of the transferee is registered in the contact address such as the telephone directory recorded in the user terminal 3 of the user of the transferor, the period registered in the contact address, or the like.

The appropriateness of the admission history is an evaluation of the use of purchased tickets by the user. The appropriateness of the admission history may be evaluated based on, for example, the admission rate of tickets purchased in the past (the ratio of the number of tickets actually used in the entertainment to the number of tickets purchased in the past). For example, when the admission rate is lower than a predetermined threshold value, the score may be calculated to be low. Alternatively, the score may be calculated to be lower as the admission rate is lower. In this manner, the appropriateness of the admission history can be evaluated based on the admission rate, and the ticket can be easily distributed to the user who has a high admission rate. As a result, the yield rate of entertainment can be maintained. The server 2, which is the entertainment quality control device, may predict the yield rate and provide it to the promoter or the like. In addition, the evaluation criterion of the appropriateness of the admission history may be made changeable based on the yield rate desired by the performer or the like.

In addition, the user ID of the user specified as a nuisance customer in the entertainment entered in the past may be recorded in the member database to that effect, and the score of such user ID may be calculated to be low.

The appropriateness of the fan capacity is an evaluation of the spread of information on the entertainment of tickets purchased in the past. For example, the appropriateness of the fan capacity may be evaluated on the basis of the number of times or the frequency at which the user diffuses the entertainment information by the functions such as "good" and "share" in the SNS. By calculating the score based on the evaluation of the appropriateness of the fan capacity, it is possible to improve the quality of the user of the entertainment by making it easier to distribute the ticket to the excellent user who actively spreads information. In addition, the evaluation may be performed based on the appropriateness of the fan capability, the frequency of visits to the event, the history of visits to the related event, the history of purchases of the related goods, and the like. As the purchase history of goods, it is preferable to acquire the purchase history of related goods purchased by logging in to the SNS account via an SNS account or the like linked to the user ID.

The evaluation of the user may be based on the relationship between the user and a third party (a person who operates the system such as a ticket distributor) regardless of whether or not the evaluation is included in the above-mentioned appropriateness of the purchase history, the appropriateness of the account, the appropriateness of the admission history, the appropriateness of the transfer destination, and the appropriateness of the fan capability. For example, "the number of friends in an SNS account" as an example of a method of evaluating the appropriateness of an account, and "whether or not the user of the transfer source and the user of the transfer destination are friends in SNS" as an example of a method of evaluating the appropriateness of the transfer destination can be considered to be included in evaluation based on the relationship between the user and the third party.

The embodiments of the present invention have been described above, but the present invention is not limited to these examples. For example, in the above embodiment, the score is calculated when the ticket is purchased or transferred, but the score may be calculated in advance (e.g., periodically) and stored in the member database in association with the user ID. In the above embodiment, the entertainment quality control apparatus of the present invention is applied to the electronic ticket system, but the entertainment quality control apparatus may be applied to the issuance of a conventional ticket such as paper. Conventional tickets such as paper have items that are difficult to evaluate, such as the history of transfer, but some items can be evaluated. Therefore, it is preferable to obtain the user ID from the purchaser when the ticket is purchased, calculate the score based on the item that can be evaluated, and judge whether or not the ticket can be issued in accordance with the calculated score. In addition, as long as the gist of the present invention is provided, a person skilled in the art may appropriately add, delete, or change the design of the constituent elements or appropriately combine the features of each embodiment with respect to the above-described embodiment, and the present invention is included in the scope of the present invention.

### Reference Signs List

- 1: Electronic ticket system
- 2: Server
- 3: User terminal
- 4: Stamp
- NW: network

## Claims

1. An entertainment quality control device comprising:
a user evaluation means for evaluating users; and
a sales permission determination means for determining whether or not to sell tickets in response to a purchase request for tickets relating to an entertainment from a user, based on the evaluation of the user by the user evaluation means, in response to the received purchase request.

2. The entertainment quality control device according to claim 1, wherein the user evaluation means evaluates the user based on at least one of the appropriateness of the purchase history, the appropriateness of the account, the appropriateness of the admission history, the appropriateness of the transfer destination, and the appropriateness of the fan capacity.

3. The entertainment quality control device according to claim 1 or 2, wherein the user evaluation means evaluates the user based on the relationship between the user and a third party.

4. The entertainment quality control device according to any one of claims 1 to 3, wherein the user evaluation means calculates a score representing an evaluation for the user, and
the sales permission determination means determines whether or not to sell a ticket according to the received purchase request based on the score calculated by the user evaluation means in response to the purchase request from the user.

5. The entertainment quality control device according to claim 4, wherein the sales permission determination means determines whether or not to sell a ticket based on a comparison result between the score calculated by the user evaluation means and a predetermined threshold.

6. The entertainment quality control device according to claim 4, wherein the sales permission determination means performs a lottery in response to the received purchase request, determines whether or not the user evaluation means has won a lottery at a winning rate in accordance with the calculated score, and determines to sell a ticket when the lottery is won.

7. The entertainment quality control device according to any one of claims 2 to 6, wherein the user evaluation means calculates a score for each of the plurality of parameters based on the plurality of parameters, and calculates a comprehensive score based on the score for each of the plurality of parameters.

8. The entertainment quality control device according to any one of claims 1 to 7, further comprises a ticket management means for managing electronic tickets,
wherein the ticket management means issues an electronic ticket when the sales permission determination means s decides to permit sales.

9. The entertainment quality control device according to claim 8, wherein the electronic ticket is allowed to be transferred from the user who owns the electronic ticket to another user,
the user evaluation means evaluates the other users, and
the ticket management means rejects the transfer or invalidates the electronic ticket to be transferred when the evaluation of the other users by the user evaluation means satisfies a predetermined condition.

10. The entertainment quality control device according to claim 8 or 9, wherein the ticket management means stores a past owner of the electronic ticket and invalidates an electronic ticket having a history of being owned by a user who satisfies a predetermined condition.

11. An entertainment quality control device for use in an electronic ticket system that permits the transfer of an electronic ticket from a user owning the electronic ticket to another user, the entertainment quality control device comprising:
a user evaluation means for evaluating the other users;
a ticket management means for managing the electronic ticket, the ticket management means refusing the transfer of the electronic ticket or invalidating the electronic ticket to be transferred in response to a transfer request of the electronic ticket from a user owning the electronic ticket to another user, when the evaluation of the other user by the user evaluation means satisfies a predetermined condition.

12. An entertainment quality control device that stores a past owner of an electronic ticket and invalidates an electronic ticket having a history of being owned by a user satisfying a predetermined condition.

13. A program for causing a computer to function as an entertainment quality control device according to any one of claims 1 to 12.
